# DEMANDE DE BREVET EUROPEEN

(11) **EP 4 775 453 A1**
(43) Date de publication de la demande: **15.07.2026**
(21) Numéro de dépôt: 25225564.1
(22) Date de dépôt: 19.12.2025
(51) Int. Cl.: B60R 5/02, B60R 7/02

(54) **DISPOSITIF DE RANGEMENT POUR UN COMPARTIMENT, NOTAMMENT AVANT, DE VÉHICULE ET AGENCEMENT LE COMPRENANT**

(30) Priorité: 13.01.2025 FR 2500297
(71) Demandeur: Renault s.a.s, 92100 Boulogne Billancourt (FR)
(72) Inventeur: BUFFETAUD, Julien, 78280 GUYANCOURT (FR); MEZIERES, Richard, 78280 GUYANCOUR (FR)

(57) **Abrégé**

Dispositif de rangement (3) pour véhicule (1) automobile comprenant un cadre (5) de support, un couvercle (30) et un bac de rangement (6) amovible comprenant un côté ouvert (62), le cadre (5) comprenant un organe de support (55) configuré pour supporter au moins une partie du bac de rangement (6), et le bac de rangement (6) comprenant un rebord (63) configuré pour être disposé au contact de l'au moins un organe de support (55) du cadre (5).

## Description

L'invention concerne un dispositif de rangement pour un compartiment de véhicule, notamment un compartiment avant. L'invention s'étend également à un agencement comprenant un tel dispositif de rangement. L'invention concerne également un véhicule comprenant l'agencement et/ou le dispositif de rangement. L'invention porte enfin sur un procédé d'utilisation du dispositif de rangement, de l'agencement et/ou du véhicule selon l'invention.

Dans le milieu automobile, il est connu d'équiper le compartiment avant du véhicule avec un dispositif de rangement, aussi qualifié de coffre avant ou « frunk » en anglais, mot formé à partir des mots « front » et « trunk ». Un tel dispositif de rangement peut être utilisé en remplacement ou complément d'un coffre arrière afin de permettre le rangement d'objets.

Classiquement, un tel coffre comprend un bac de rangement fixé sur la structure de caisse du véhicule, par exemple sur des traverses du compartiment avant. En fonction du porte-à-faux et de la hauteur de l'avant du véhicule, et par extension du capot, l'accessibilité au bac de rangement, et plus particulièrement au fond du bac de rangement, peut être affectée.

La présente invention s'inscrit dans ce contexte et vise à fournir un dispositif de rangement et un agencement pour véhicule automobile permettant de résoudre les inconvénients précités en optimisant l'accessibilité à un dispositif de rangement, notamment destiné à un compartiment avant de véhicule, qui soit simple de mise en œuvre et peu coûteux.

L'invention porte sur un dispositif de rangement pour véhicule automobile, comprenant un cadre de support, un bac de rangement amovible comprenant un côté ouvert et un couvercle configuré pour fermer le côté ouvert :
- le cadre comprenant une pluralité de flancs, délimitant un espace apte à recevoir le bac de rangement, au moins un organe de support configuré pour supporter au moins une partie du bac de rangement, notamment de manière suspendue, et une pluralité de pattes de fixation configurées pour coopérer avec une structure de caisse du véhicule ;
- le bac de rangement comprenant une pluralité de parois, délimitant un volume interne, et au moins un rebord bordant au moins en partie le côté ouvert du bac de rangement et configuré pour être disposé au contact de l'au moins un organe de support du cadre ;
- le couvercle étant configuré pour coopérer avec l'au moins un rebord.

Notamment, le dispositif de rangement comprend, en outre, au moins un moyen de préhension :
- relié à l'au moins un rebord du bac de rangement ; et/ou
- configuré pour s'étendre au moins en partie à travers le couvercle, ledit couvercle comprenant au moins une découpe apte à recevoir l'au moins un moyen de préhension.

Optionnellement, le dispositif de rangement comprend, en outre, une pluralité d'organes de maintien élastiquement déformables, configurés pour maintenir le bac de rangement et/ou le couvercle en position relativement au cadre de support :
- lesdits organes de maintien étant des organes de rappel rapportés et reliés au cadre ; ou
- lesdits organes de maintien étant compris dans le cadre.

Notamment, dans lequel :
- le cadre est réalisé dans un matériau plastique, notamment chargé, et/ou dans un matériau métallique ; et/ou
- le bac de rangement est réalisé dans un matériau plastique, notamment chargé, et/ou dans un matériau métallique.

Selon des exemples de réalisation :
- les pattes de fixation sont rapportées et fixées à au moins deux flancs opposés de la pluralité de flancs ; et/ou
- le bac de rangement comprend au moins un organe de renfort, disposé sur au moins l'une des parois.

Optionnellement, le dispositif de rangement comprend, en outre, au moins un organe d'amortissement :
- relié à l'au moins un organe de support ou au rebord de sorte à être interposé entre le cadre et le bac de rangement ; et/ou
- relié au couvercle ou au rebord de sorte à être interposé entre le bac de rangement et le couvercle.

Optionnellement, le dispositif de rangement comprend, en outre, un accessoire, tel qu'une doublure, une paroi amovible, une boîte de stockage et/ou un organe de fixation, configuré pour être disposé dans le volume interne du bac de rangement.

L'invention porte également sur un agencement pour véhicule automobile comprenant un dispositif de rangement selon l'invention, une structure de caisse et une pluralité de moyens de fixation, le dispositif de rangement étant relié, par l'intermédiaire de la pluralité de pattes de fixation et des moyens de fixation, à la structure de caisse.

L'invention porte encore sur un véhicule automobile comprenant un compartiment avant et un compartiment arrière, ainsi qu'un dispositif de rangement ou un agencement selon l'invention disposé dans le compartiment avant ou dans le compartiment arrière du véhicule.

L'invention porte enfin sur un procédé d'utilisation d'un dispositif de rangement, d'un agencement ou d'un véhicule selon l'invention, comprenant :
- la préhension puis l'extraction du bac de rangement de sorte à le séparer du cadre de support ; et/ou
- la préhension du bac de rangement puis le positionnement du bac de rangement dans l'espace délimité par le cadre de sorte à disposer le rebord du bac de rangement au contact de l'au moins un organe de support du cadre.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une vue schématique d'un véhicule selon un mode de réalisation comprenant un agencement selon l'invention comportant un dispositif de rangement.
La figure 2 est une vue schématique d'un compartiment avant de véhicule équipé du dispositif de rangement comprenant un cadre, un bac de rangement et un couvercle.
La figure 3 est une vue schématique du dispositif de rangement selon la figure 2 disposé dans le véhicule, sans le bac de rangement et le couvercle.
La figure 4 est une vue schématique en coupe du dispositif de rangement.
La figure 5 est une représentation schématique en coupe de la coopération entre le couvercle, le bac de rangement et un cadre du dispositif de rangement.
La figure 6 est une représentation schématique en perspective d'un exemple de réalisation d'un organe de maintien du dispositif de rangement.
La figure 7 est une représentation schématique d'un exemple de réalisation du dispositif de rangement.
La figure 8 est une représentation schématique du dispositif de rangement sans le couvercle.

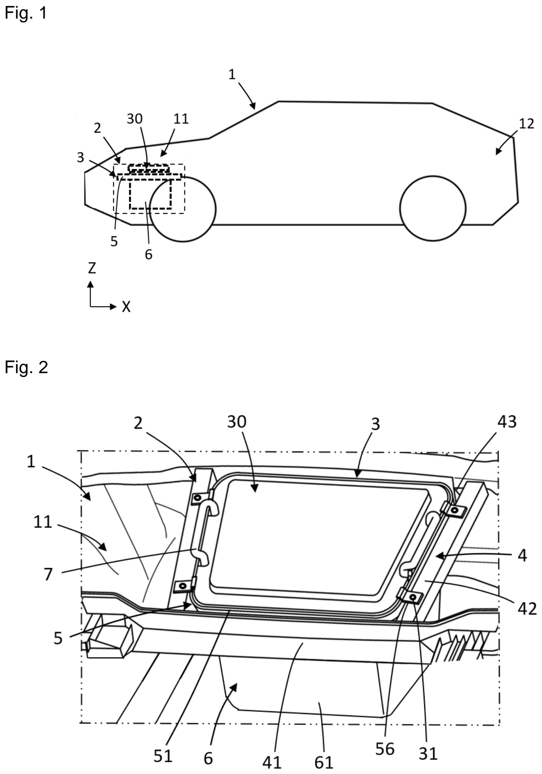

La figure 1 illustre schématiquement un exemple de réalisation d'un véhicule 1 automobile. Le véhicule 1 considéré peut être de tout type. Par exemple, le véhicule 1 peut être à motorisation thermique, électrique ou hybride. Également, le véhicule 1 peut être un véhicule particulier, utilitaire ou dédié aux transports en commun.

Par convention dans la description ci-après, la direction selon laquelle le véhicule 1 automobile se déplace en ligne droite est définie comme étant la direction longitudinale X, orientée de l'avant vers l'arrière. La direction perpendiculaire à la direction longitudinale et située dans un plan parallèle au sol est nommée direction transversale Y. La direction perpendiculaire aux directions X et Y est nommée direction verticale Z. Ainsi, on définit un repère direct XYZ représenté dans les figures le nécessitant.

Les termes « avant » et « arrière » s'appliquent dans leur sens usuel, « inférieur » en fonction de la position au sein du véhicule 1 le long de la direction longitudinale X. Les termes « premier » et « deuxième » ont vocation à distinguer des composants similaires et non à établir une hiérarchie au sein de l'invention.

De manière classique, le véhicule 1 comprend un compartiment avant 11, comprenant une face avant technique du véhicule 1, et un compartiment arrière 12. De manière classique, le compartiment avant 11 est disposé devant un habitacle du véhicule 1 tandis que le compartiment arrière 12 est disposé à l'arrière de celui-ci le long de la direction longitudinale X.

Le véhicule 1 comprend également un agencement 2 selon l'invention, comportant un dispositif de rangement 3, une structure de caisse 4 et une pluralité de moyens de fixation 31 configurés pour fixer le dispositif de rangement 3 à la structure de caisse 4, tel que davantage détaillé ci-après. Additionnellement ou alternativement, le véhicule 1 comprend un dispositif de rangement 3 en tant que tel.

Dans la description ci-après, l'agencement 2 est décrit comme étant disposé dans le compartiment avant 11 du véhicule 1. De manière classique, le compartiment avant 11 est fermé par un capot mobile, non représenté. Selon une alternative non représentée, l'agencement 2 peut être disposé dans le compartiment arrière 12. Il est entendu que la description s'applique *mutatis mutandis à* une telle alternative.

La structure de caisse 4 comprend une pluralité d'éléments rigides fixes du véhicule 1, notamment réalisés dans un matériau métallique tel que de la tôle d'acier. De manière optionnelle mais préférentielle, de tels éléments présentent une structure allongée, c'est-à-dire qu'ils présentent une longueur strictement supérieure à leur largeur et à leur épaisseur. Optionnellement encore, tout ou partie desdits éléments présente structure rectiligne ou sensiblement rectiligne.

Selon un exemple de réalisation non limitatif, illustré dans les figures, la structure de caisse 4 considérée comprend une pluralité de traverses 41 et une pluralité de poutres 42 de liaison, reliant lesdites traverses 41 entre elles. En l'espèce, les traverses 41 s'étendent parallèlement ou sensiblement parallèlement à la direction transversale Y. La combinaison des traverses 41 et des poutres 42 forme ainsi un encadrement fermé délimitant un trou 43 apte à recevoir au moins une partie du dispositif de rangement 3.

Selon une alternative non représentée, la structure de caisse 4 comprend une pluralité de longerons et une pluralité de poutres de liaison, reliant lesdits longerons entre eux. De tels longerons s'étendent alors parallèlement ou sensiblement parallèlement à la direction longitudinale X. La combinaison des longerons et des poutres forme alors un encadrement fermé délimitant le trou apte à recevoir au moins une partie du dispositif de rangement 3.

De manière générale, le dispositif de rangement 3 comprend un cadre 5 de support, un bac de rangement 6 amovible ouvert sur un côté, apte à être déplacé relativement au cadre 5 de sorte à coopérer ou non avec celui-ci et un couvercle 30 configuré pour fermer le côté ouvert 62 du bac de rangement 6.

Le cadre 5 est une structure de support configurée pour être reliée à la structure de caisse 4 de manière fixe. Le cadre 5 comprend une pluralité de flancs 51 délimitant un espace 52 apte à recevoir le bac de rangement 6. Notamment, lesdits flancs 51 délimitent une forme fermée. En l'espèce, un tel espace 52 est délimité par des faces internes 51a des flancs 51, tournées vers l'espace 52. A l'inverse, des faces externes 51b des flancs 51 sont configurées pour être tournées vers au moins l'un des éléments de la structure de caisse 4 lorsque le dispositif de rangement 3 est disposé dans l'agencement 2 et/ou le véhicule 1.

Le cadre 5 est dimensionné et conformé de sorte à coopérer avec la structure de caisse 4, tel que davantage détaillé ci-après. Notamment, le cadre 5 est dimensionné et conformé de sorte à s'étendre au moins en partie en regard du trou 43 délimité par les éléments de la structure de caisse 4 et/ou de sorte à s'étendre au moins en partie dans ledit trou 43.

Le cadre 5 est dimensionné et conformé de sorte à entourer au moins en partie le bac de rangement 6. Notamment, le cadre 5 est complémentaire de forme d'au moins une partie du bac de rangement 6. Par exemple, une périphérie interne du cadre 5, comprise dans les faces internes 51a des flancs 51, est complémentaire de forme du bac de rangement 6.

Par exemple, au moins une partie des flancs 51 est configurée pour s'étendre parallèlement ou sensiblement parallèlement à des parois du bac de rangement 6. Notamment, au moins une partie des flancs 51 s'inscrit dans une forme polygonale, par exemple, de manière non limitative, de section trapézoïdale, carrée ou rectangulaire de sorte à optimiser la capacité de stockage du bac de rangement 6 et de sorte à s'adapter à l'encombrement du compartiment considéré, ici le compartiment avant 11.

Particulièrement, le cadre 5 comprend au moins un organe de support 55, tel qu'un bord ou un épaulement, configuré pour supporter au moins une partie du bac de rangement 6, notamment de sorte à maintenir ce dernier suspendu relativement au cadre 5. L'au moins un organe de support 55 est relié à au moins l'un des flancs 51 et s'étend au moins en partie transversalement au flanc 51 considéré. Notamment, l'au moins un organe de support 55 est relié à une ou plusieurs extrémité(s) du cadre 5 ou comprend une ou plusieurs extrémité(s) 53a du cadre 5, notamment ici une ou plusieurs extrémité(s) inférieure(s) lorsque le dispositif de rangement 3 est disposé dans le véhicule 1.

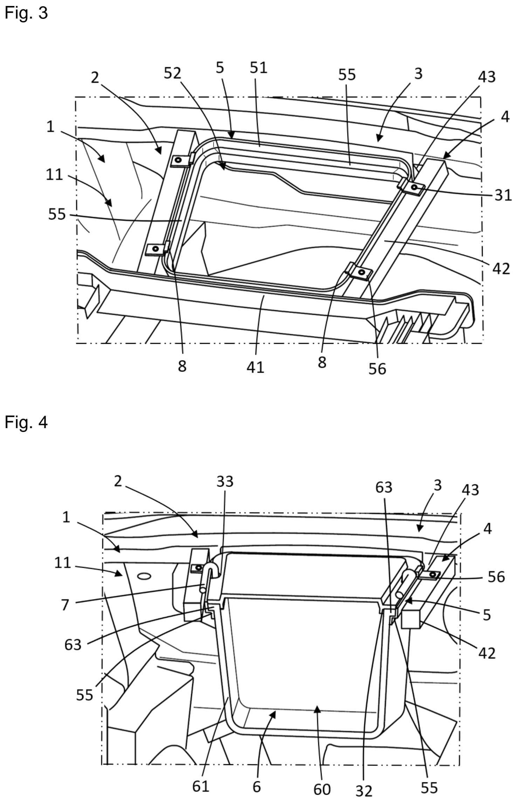

L'au moins un organe de support 55 peut être continu de sorte à s'étendre sur tout ou partie d'un pourtour du cadre 5, tel qu'illustré à la figure 3. Selon un exemple de réalisation alternatif, non représenté, l'au moins un organe de support 55 est discontinu. Il peut alors être formé par une pluralité de lamelles, ou épaulements, réparties sur la périphérie interne du cadre 5. Par exemple, de telles lamelles sont au moins disposées au niveau de flancs 51 opposés du cadre 5.

Selon des exemples de réalisation préférentiels, le cadre 5 est réalisé dans un matériau plastique, notamment chargé, et/ou dans un matériau métallique. Par exemple, le cadre 5, notamment les flancs 51, présente une épaisseur supérieure ou égale à 3 mm, par exemple de l'ordre de 5 mm.

Le cadre 5 comprend également une pluralité de pattes de fixation 56 configurées pour coopérer avec la structure de caisse 4. Les pattes de fixation 56 sont reliées à au moins l'un des flancs 51 du cadre 5. Particulièrement, lesdites pattes de fixation 56 sont reliées à l'une des faces externes 51b de l'un des flancs 51 de sorte à s'étendre à l'opposé de l'espace 52 délimité par le cadre 5, c'est-à-dire dans un environnement extérieur au cadre 5.

Notamment, les pattes de fixation 56 sont disposées au niveau d'au moins deux flancs 51 opposés du cadre 5, c'est-à-dire qu'au moins un premier sous-ensemble, comprenant au moins une patte de fixation 56 est relié à un premier flanc du cadre 5 tandis qu'au moins un deuxième sous-ensemble, comprenant une patte de fixation 56 distincte, est relié à un deuxième flanc, opposé au premier flanc. De manière préférentielle, les pattes de fixation 56 sont disposées sur les différents flancs 51 délimitant le cadre 5 de sorte à optimiser son maintien relativement à la structure de caisse 4.

Similairement aux flancs 51 du cadre 5, les pattes de fixation 56 sont réalisées dans un matériau plastique et/ou dans un matériau métallique, tel que de qu'indiqué plus haut. Selon un exemple de réalisation, les pattes de fixation 56 sont rapportées et fixées relativement aux flancs 51 du cadre 5. Notamment, les pattes de fixation 56 sont reliées au flanc par l'intermédiaire d'organes de fixation, tels que des vis, ou par soudage selon les matériaux utilisés. Alternativement, la pluralité de flancs 51 et la pluralité de pattes de fixation 56 forment un ensemble monobloc, c'est-à-dire que lesdits flancs 51 et pattes ne peuvent être dissociés les uns des autres sans résulter en la dégradation, voire destruction du cadre 5 de support.

De manière préférentielle, les pattes de fixation 56 comprennent au moins un segment plan ou sensiblement plan, configuré pour coopérer avec la structure de caisse 4, notamment avec une zone plane ou sensiblement plane de la structure de caisse 4. On entend ici par « segment » une portion d'un tout.

Les pattes de fixation 56 sont ainsi configurées pour être disposées en appui de la structure de caisse 4, notamment de sorte à maintenir le cadre 5 suspendu en regard du trou 43 délimité par la structure de caisse 4 et/ou dans ledit trou 43. Par exemple, les pattes de fixation 56 sont disposées et conformées de sorte qu'une interface de coopération avec la structure de caisse 4 formée par les différentes pattes de fixation 56 s'inscrit dans un même plan.

Les pattes de fixation 56 comprennent également chacune au moins un orifice, non détaillé, configuré pour recevoir l'un des moyens de fixation 31. Notamment, l'orifice considéré est disposé dans le segment plan ou sensiblement plan.

Les moyens de fixation 31 sont configurés pour fixer le dispositif de rangement 3 à la structure de caisse 4 par l'intermédiaire de la pluralité de pattes de fixation 56 de manière réversible. Un tel principe permet avantageusement de conserver l'accessibilité à une partie inférieure du véhicule 1, notamment en vue de l'entretien de composants équipant le véhicule 1 disposés sous l'agencement 2 selon l'invention. Par exemple, les moyens de fixation 31 sont des vis, des ensembles vis écrous ou encore des clips.

Le bac de rangement 6 est une structure amovible relativement au cadre 5. Il comprend une pluralité de parois 61 délimitant un volume interne 60 et un côté ouvert 62. Notamment, le côté ouvert 62 est destiné à présenter une position supérieure lorsque le bac de rangement 6 est équipé dans le véhicule 1, de sorte à permettre un accès au volume interne 60 par le dessus.

Le bac de rangement 6 comprend notamment un fond, formé par l'une des parois 61, et une pluralité de parois 61 latérales définissant la forme du bac de rangement 6. Le côté ouvert 62 est disposé de sorte à être opposé au fond. Aussi, le fond est disposé dans le dispositif de rangement 3 de sorte à présenter une position la plus inférieure. Par exemple, le fond est plat ou sensiblement plat. Des surfaces intérieures des différentes parois 61 sont tournées vers le volume interne 60 du bac de rangement 6 tandis que des surfaces extérieures, opposées aux surfaces intérieures, sont configurées pour être tournées vers l'environnement extérieur au bac de rangement 6.

Tel que décrit précédemment, de manière optionnelle mais préférentielle, le bac de rangement 6 est au moins en partie complémentaire de forme du cadre 5 de sorte à optimiser le maintien du bac de rangement 6 relativement au cadre 5. Par exemple, les parois 61 du bac de rangement 6 s'inscrivent dans une forme présentant une section polygonale, notamment, de manière non limitative, une section trapézoïdale, carrée ou rectangulaire de sorte à optimiser la capacité de stockage du bac de rangement 6 et à s'adapter à l'encombrement du compartiment considéré, ici le compartiment avant 11. Une telle section est ici considérée dans un plan orthogonal à la direction verticale Z et/ou parallèle au côté ouvert 62 du bac de rangement 6.

De manière optionnelle, les parois 61 s'inscrivent dans une forme évasée, le fond du bac de rangement 6 présentant une dimension strictement inférieure à une dimension du côté ouvert 62 de sorte à faciliter l'accès au bac de rangement 6.

Le bac de rangement 6 comprend, en outre au moins un rebord 63 bordant au moins en partie le côté ouvert 62 du bac de rangement 6 et configuré pour coopérer avec au moins une partie de l'au moins un organe de support 55 du cadre 5.

L'au moins un rebord 63 est configuré pour être disposé en appui de l'au moins un organe de support 55 du cadre 5. De la sorte le bac de rangement 6 est maintenu suspendu par le cadre 5 de support, le bac de rangement 6 s'étendant en partie à travers le cadre 5, c'est-à-dire dans l'espace 52 délimité par le cadre 5. L'au moins un rebord 63 est relié à au moins une l'une des parois 61 et s'étend transversalement à la paroi considérée.

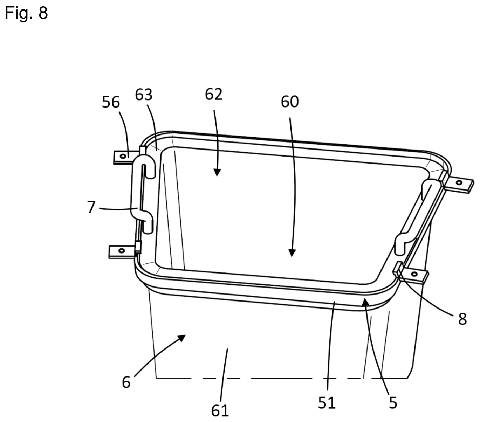

De manière préférentielle, l'au moins un rebord 63 est continu et s'étend sur tout ou partie d'un pourtour du côté ouvert du bac de rangement 6, tel qu'illustré à la figure 8. Selon un exemple de réalisation alternatif, non représenté, l'au moins un rebord 63 est discontinu et réparti sur une partie du pourtour du côté ouvert 62 de sorte à s'étendre en regard de l'au moins un organe de support 55 du cadre 5. Par exemple, lorsque l'au moins un rebord 63 est discontinu, il est au moins disposé sur des parois 61 opposées du bac de rangement 6.

Une telle coopération entre le bac de rangement 6 et le cadre 5 permet ainsi avantageusement de pouvoir extraire le bac de rangement 6 du véhicule 1 en le séparant du cadre 5 de support afin d'accéder à des objets disposés au fond du bac de rangement 6 tandis que le cadre 5 reste fixé à la structure de caisse 4. Une fois de tels objets récupérés, le bac de rangement 6 peut ensuite être repositionné en suspension sur le cadre 5 par une simple manipulation, tel que davantage décrit ci-après en référence au procédé d'utilisation du dispositif de rangement 3.

Optionnellement, l'au moins un rebord 63 est au moins en partie arrondi de sorte à limiter les risques de blessure de l'utilisateur lorsque celui-ci interagit avec le bac de rangement 6. Par exemple, l'interface de liaison entre l'au moins un rebord 63 et au moins l'une des parois 61 du bac de rangement 6 est arrondie.

Selon des exemples de réalisation préférentiels, le bac de rangement 6 est réalisé dans un matériau plastique, notamment chargé, et/ou dans un matériau métallique. Par exemple, le bac de rangement 6, notamment les parois 61, présente une épaisseur supérieure ou égale à 1 mm, par exemple de l'ordre de 2 mm.

Le couvercle 30 est configuré pour fermer le côté ouvert 62 du bac de rangement 6. Le couvercle 30 est dimensionné et conformé de sorte à être complémentaire de forme du bac de rangement 6, notamment de sorte à être complémentaire de forme du côté ouvert 62 du bac de rangement 6.

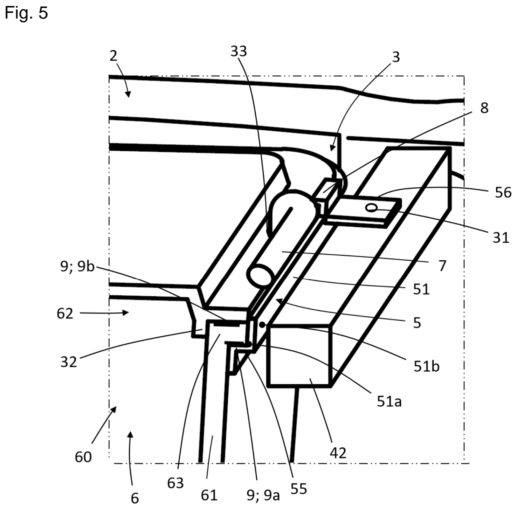

Le couvercle 30 est configuré pour coopérer avec les parois 61 et/ou avec le rebord 63 du bac de rangement 6. De manière optionnelle mais préférentielle, tel qu'illustré à la figure 5, le couvercle 30 est configuré pour s'étendre en regard et en appui du rebord 63.

Optionnellement, le couvercle 30 comprend un organe de butée 32, configuré pour s'étendre au contact d'au moins deux parois 61 du bac de rangement 6 et/ou de deux portions opposées du rebord 63 de sorte à limiter les déplacements du couvercle 30 le long d'au moins une direction, par exemple ici le long de la direction longitudinale X et/ou le long de la direction transversale Y. Par exemple, l'organe de butée 32 est configuré pour s'étendre dans le volume interne 60, notamment au contact de tout ou partie du pourtour du côté ouvert 62 lorsque le couvercle 30 est disposé sur le bac de rangement 6. L'organe de butée 32 peut ainsi s'étendre de manière continue ou non au contact du pourtour du côté ouvert 62.

Selon des exemples de réalisation préférentiels, le couvercle 30 est réalisé dans un matériau plastique, notamment chargé, et/ou dans un matériau métallique. Par exemple, le couvercle 30 présente une épaisseur supérieure ou égale à 1 mm, par exemple de l'ordre de 2 mm.

Tel qu'illustré, le couvercle 30 est amovible et rapporté sur le bac de rangement 6, il peut ainsi être séparé du bac de rangement 6 lorsqu'un utilisateur souhaite accéder au volume interne 60 et à des objets qui y sont stockés.

Selon un exemple de réalisation alternatif, non représenté, le couvercle 30 est relié au bac de rangement 6 et configuré pour être mobile relativement à celui-ci. Par exemple, le couvercle 30 est relié au bac de rangement 6 par l'intermédiaire d'un organe de liaison, non représenté, tel qu'une liaison pivot.

De manière optionnelle mais préférentielle, le bac de rangement 6 comprend, en outre, au moins un moyen de préhension 7. Notamment, l'au moins un moyen de préhension 7 est rapporté et fixé sur une partie du bac de rangement 6, par exemple par vissage, soudage ou par l'intermédiaire d'une fixation réversible. Selon un exemple de réalisation préférentiel, l'au moins un moyen de préhension 7 est relié au rebord 63. Optionnellement mais préférentiellement, l'au moins un moyen de préhension 7 s'étend au moins en partie en dehors du volume interne 60 du bac de rangement 6, c'est-à-dire dans un environnement extérieur audit bac. Selon une alternative non représentée, l'au moins un moyen de préhension 7 est relié à la surface interne de l'une des parois 61 du bac de rangement 6. L'au moins un moyen de préhension 7 peut alors être configuré pour s'étendre au moins en partie dans le volume interne 60.

De manière préférentielle, l'au moins un moyen de préhension 7 est configuré pour s'étendre au moins en partie à travers le couvercle 30. Le couvercle 30 comprend alors au moins une découpe 33 apte à recevoir l'au moins un moyen de préhension 7, autrement dit au moins une découpe 33 apte à permettre le passage de l'au moins un moyen de préhension 7. L'au moins une découpe 33 est traversante, celle-ci s'étendant entre une première face, configurée pour être tournée vers le volume interne du bac de rangement 6, et une deuxième face, opposée, du couvercle 30. Un tel principe permet avantageusement la manipulation de l'ensemble formé par le couvercle 30 et le bac de rangement 6 sans qu'il soit nécessaire de retirer le couvercle 30 pour extraire le bac de rangement 6 du véhicule 1, tel que davantage détaillé ci-après. L'au moins une découpe 33 peut également avoir fonction d'indexage de sorte à permettre le bon positionnement du couvercle 30 relativement au bac de rangement 6.

Par exemple, l'au moins une découpe 33 est complémentaire de forme de l'au moins un moyen de préhension 7. Notamment, l'au moins une découpe 33 est ouverte, c'est-à-dire qu'elle débouche sur un pourtour du couvercle 30 de sorte à permettre de séparer le couvercle 30 du bac de rangement 6 lorsque l'au moins un moyen de préhension 7 s'étend à travers le couvercle 30.

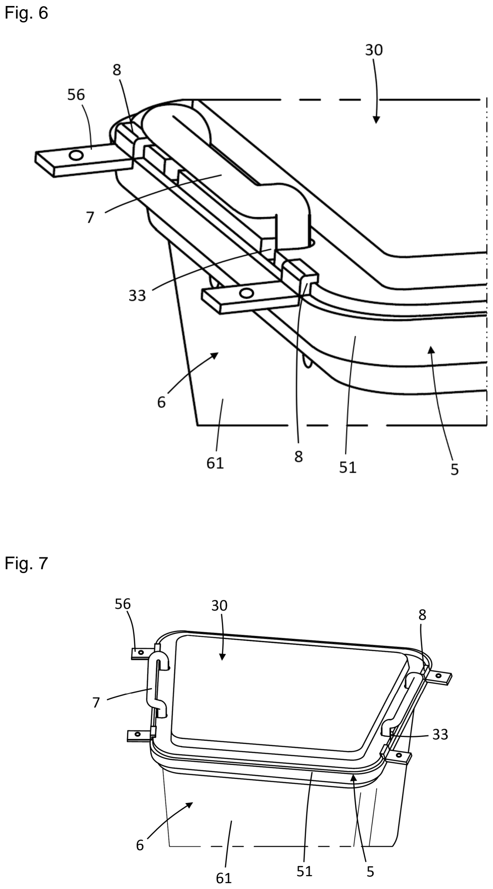

Selon des alternatives de réalisation, le moyen de préhension 7 peut être une poignée rigide fixe, tel qu'illustré dans les figures 2, 6, 7 ou 8 , une poignée mobile, par exemple pivotante, ou encore une poignée souple telle qu'une lanière.

Notamment, le bac de rangement 6 comprend une pluralité de moyens de préhension 7, par exemple une paire de moyens de préhension 7 disposés sur des portions opposées du bac de rangement 6, notamment des portions opposées du rebord 63 ou des parois 61 opposées. Aussi, il est entendu que la présente description s'étend à une pluralité de moyens de préhension 7.

De manière optionnelle, le bac de rangement 6 comprend des éléments de renfort, non représentés, disposés sur tout ou partie des surfaces extérieures des parois 61. Par exemple, lesdits éléments de renfort sont des nervures.

Optionnellement encore, le dispositif de rangement 3 comprend, en outre, une pluralité d'organes de maintien 8 du bac de rangement 6 et/ou du couvercle 30 élastiquement déformables. De tels organes de maintien 8 sont configurés pour maintenir au moins le bac de rangement 6 en position relativement au cadre 5 de support et ainsi prévenir son déplacement ou d'éventuelles vibrations et nuisances sonores lors du roulage du véhicule 1. Avantageusement, de tels organes de maintien 8 sont configurés d'une part pour maintenir l'ensemble formé par le bac de rangement 6 et le couvercle 30 en position relativement au cadre 5 de support et, d'autre part, pour maintenir le couvercle 30 en position relativement au bac de rangement 6. Notamment, les organes de maintien 8 sont configurés pour s'étendre au contact de la deuxième face du couvercle 30. Optionnellement, ils sont également configurés pour maintenir la première face du couvercle 30 au contact du rebord 63 du bac de rangement 6.

Lesdits organes de maintien 8 sont reliés ou compris dans au moins une partie des flancs 51 du cadre 5. De manière préférentielle, les organes de maintien 8 sont au moins disposés au niveau de deux flancs 51 opposés du cadre 5. Optionnellement, les organes de maintien 8 sont disposés au niveau des différents flancs 51 du cadre 5. Par exemple, lesdits organes de maintien 8 sont reliés à l'une des extrémités d'au moins l'un des flancs du cadre 5, notamment ici une extrémité supérieure du cadre 5 lorsque celui-ci est disposé dans le véhicule 1.

De manière optionnelle mais préférentielle, les organes de maintien 8 sont disposés de sorte à s'étendre en regard de l'au moins un moyen de préhension 7 et/ou de l'au moins une paroi 61 ou portion du rebord 63 portant un tel moyen de préhension 7 de sorte à optimiser la maniabilité du bac de rangement 6 et la déformation des organes de maintien 8 lors de la manipulation du bac de rangement 6.

Lesdits organes de maintien 8 sont configurés pour être déformés entre un état « déformé » et un état « nominal ». Lorsque les organes de maintien 8 sont dans l'état « déformé », ils permettent le déplacement du bac de rangement 6, et optionnellement du couvercle 30, relativement au cadre 5, notamment afin d'en permettre l'extraction et la séparation du cadre 5 ou, inversement, l'insertion dans l'espace 52 délimité par le cadre 5 et le positionnement sur le cadre 5, notamment de manière suspendue. Inversement, lorsque les organes de maintien 8 sont dans l'état « nominal », c'est-à-dire lorsqu'ils sont relâchés, les organes de maintien 8 sont configurés pour s'étendre au moins partiellement en regard ou en butée de l'au moins un rebord 63 du bac de rangement 6 le long d'une direction et/ou en regard d'au moins une partie du couvercle 30, ici le long de la direction verticale Z, de sorte à limiter le déplacement du bac relativement au cadre 5 de support ou de sorte à limiter le déplacement du couvercle 30 et du bac de rangement 6 tel qu'indiqué plus haut.

Selon un exemple de réalisation, illustré à la figure 5, les organes de maintien 8 sont rapportés et fixés sur le cadre 5, notamment chacun sur l'un des flancs 51 du cadre 5. Notamment, les organes de maintien 8 sont des crochets ou dents élastiquement déformables ou des organes de rappel tels que des ressorts à lame ou autre.

Selon un exemple de réalisation alternatif, non représenté, les organes de maintien 8 sont compris dans le cadre 5. Par exemple, les organes de maintien 8 sont des crochets, dents ou languettes élastiquement déformables formées dans le cadre 5, par exemple par découpe 33 et déformation du cadre 5.

Optionnellement, le dispositif de rangement 3 comprend, au moins un organe d'amortissement 9 configuré pour permettre la réduction d'éventuelles nuisances sonores et vibrations au sein du dispositif de rangement 3 lorsque le véhicule 1 est en situation de roulage. Par exemple, l'organe d'amortissement 9 est une mousse ou une bande élastiquement déformable.

Selon un exemple de réalisation, au moins un organe d'amortissement 9a est relié à l'au moins un organe de support 55 du cadre 5 ou à l'au moins un rebord 63 du bac de rangement de sorte à être interposé entre le cadre 5 et le bac de rangement 6 lorsque le dispositif de rangement 3 est assemblé.

Selon un exemple de réalisation alternatif ou additionnel, au moins un organe d'amortissement 9b est relié au couvercle 30 ou au rebord 63 de sorte à être interposé entre le bac de rangement 6 et le couvercle 30 au sein du dispositif de rangement 3.

Avantageusement, le dispositif de rangement 3 peut optionnellement comprendre au moins un accessoire, tel que :
- une doublure configurée pour être disposée dans le volume interne 60, notamment de sorte à couvrir tout ou partie des surfaces intérieures des parois 61 ;
- une paroi amovible configurée pour être disposée dans le volume interne 60, par exemple de sorte à compartimenter le volume interne 60 et ainsi délimiter différentes zones de rangement, notamment de formes prédéfinies de sorte à stocker des objets particuliers, tel qu'un triangle de signalisation ou autre ;
- une boîte de stockage ; et/ou
- un organe de fixation, tel qu'un crochet ou une sangle, configuré pour être disposé dans le bac de rangement 6 et pour maintenir un ou plusieurs objets en position dans le bac de rangement 6.

Optionnellement encore, l'agencement 2 ou le véhicule 1 selon l'invention peut comprendre au moins un cache, non représenté, disposé autour du dispositif de rangement 3, particulièrement autour du cadre 5 de support, et configuré pour s'étendre dans le compartiment considéré de sorte à dissimuler des composants du véhicule 1 et/ou la structure de caisse 4.

L'invention s'étend également à un procédé d'utilisation du dispositif de rangement 3 selon l'invention, correspondant également à un procédé d'utilisation de l'agencement 2 ou du véhicule 1 comprenant un tel dispositif de rangement 3.

Le procédé comprend, lorsqu'un utilisateur souhaite récupérer un objet dans le bac de rangement 6, la préhension puis l'extraction du bac de rangement 6 de sorte à le séparer du cadre 5 de support, particulièrement de sorte à séparer l'au moins un organe de support 55 du cadre 5 de l'au moins un rebord 63 du bac de rangement 6. Le bac de rangement 6 est, par exemple, déplacé selon un mouvement de translation, ici le long de la direction verticale Z. Par exemple, la préhension du bac de rangement 6 est réalisée par l'intermédiaire de l'au moins un moyen de préhension 7. Notamment, l'extraction du bac de rangement 6 nécessite l'exercice d'un effort de sorte à déformer élastiquement les organes de maintien 8 et ainsi désolidariser le bac de rangement 6 du cadre 5 de support.

Notamment, une telle extraction peut être réalisée de sorte à extraire l'ensemble formé par le bac de rangement 6 et le couvercle 30. Alternativement, le couvercle 30 peut être retiré et séparé du bac de rangement 6 préalablement à l'extraction du bac de rangement 6.

Additionnellement ou alternativement, lorsque le bac de rangement 6 doit être disposé dans le véhicule 1 ou l'agencement 2, le procédé comprend la préhension du bac de rangement 6 puis le positionnement du bac de rangement 6 dans l'espace 52 délimité par le cadre 5 de sorte à disposer le bac de rangement 6 en suspension relativement au cadre 5 et de sorte que l'au moins un rebord 63 du bac de rangement 6 s'étend en appui d'au moins une partie de l'au moins un organe de support 55 du cadre 5. Similairement à ce qui a été indiqué plus haut, une telle préhension peut être réalisée par l'intermédiaire de l'au moins un moyen de préhension 7. Notamment, un tel positionnement s'accompagne de la déformation élastique des organes de maintien 8 afin de disposer le bac de rangement 6 en position puis le relâchement d'une telle déformation de sorte que les organes de maintien 8 s'étendent au moins partiellement en regard ou en butée de l'au moins un rebord 63 le long d'une direction, ici le long de la direction verticale Z, de sorte à limiter le déplacement du bac relativement au cadre 5 de support, et/ou de sorte que les organes de maintien 8 s'étendent au moins partiellement en regard du couvercle 30.

Notamment, une telle insertion peut être réalisée de sorte à positionner l'ensemble formé par le bac de rangement 6 et le couvercle 30 dans le véhicule 1. Alternativement, le couvercle 30 peut être positionné sur le bac de rangement 6 suite au positionnellement du bac de rangement 6 sur le cadre 5.

La présente invention propose ainsi un dispositif de rangement et un agencement comprenant un tel dispositif, le dispositif de rangement comprenant un cadre de support et un bac de rangement amovible configuré pour coopérer avec ledit cadre, notamment de sorte à permettre le maintien en suspension du bac de rangement dans un véhicule tout en permettant son extraction selon le besoin et ce à moindre coût et sans affecter l'encombrement du compartiment du véhicule considéré, par exemple le compartiment avant.

La présente invention ne saurait toutefois se limiter aux moyens et configurations décrits et illustrés ici et elle s'étend également à tout moyen ou configuration équivalents et à toute combinaison techniquement opérante de tels moyens dans la mesure où ils remplissent *in fine* les fonctionnalités décrites et illustrées dans le présent document.

## Revendications

1. Dispositif de rangement (3) pour véhicule (1) automobile, comprenant un cadre (5) de support, un bac de rangement (6) amovible comprenant un côté ouvert (62) et un couvercle (30) configuré pour fermer le côté ouvert (62) :
- le cadre (5) comprenant une pluralité de flancs (51), délimitant un espace (52) apte à recevoir le bac de rangement (6), au moins un organe de support (55) configuré pour supporter au moins une partie du bac de rangement (6), notamment de manière suspendue, et une pluralité de pattes de fixation (56) configurées pour coopérer avec une structure de caisse (4) du véhicule (1) ;
- le bac de rangement (6) comprenant une pluralité de parois (61), délimitant un volume interne (60), et au moins un rebord (63) bordant au moins en partie le côté ouvert (62) du bac de rangement (6) et configuré pour être disposé au contact de l'au moins un organe de support (55) du cadre (5) ;
- le couvercle (30) étant configuré pour coopérer avec l'au moins un rebord (63).

2. Dispositif de rangement (3) selon la revendication précédente, comprenant, en outre, au moins un moyen de préhension (7) :
- relié à l'au moins un rebord (63) du bac de rangement (6) ; et/ou
- configuré pour s'étendre au moins en partie à travers le couvercle (30), ledit couvercle (30) comprenant au moins une découpe (33) apte à recevoir l'au moins un moyen de préhension (7).

3. Dispositif de rangement (3) selon l'une des revendications précédentes, comprenant, en outre, une pluralité d'organes de maintien (8) élastiquement déformables, configurés pour maintenir le bac de rangement (6) et/ou le couvercle (30) en position relativement au cadre (5) de support :
- lesdits organes de maintien (8) étant des organes de rappel rapportés et reliés au cadre (5) ; ou
- lesdits organes de maintien (8) étant compris dans le cadre (5).

4. Dispositif de rangement (3) selon l'une des revendications précédentes, dans lequel :
- le cadre (5) est réalisé dans un matériau plastique, notamment chargé, et/ou dans un matériau métallique ; et/ou
- le bac de rangement (6) est réalisé dans un matériau plastique, notamment chargé, et/ou dans un matériau métallique.

5. Dispositif de rangement (3) selon l'une des revendications précédentes, dans lequel :
- les pattes de fixation (56) sont rapportées et fixées à au moins deux flancs (51) opposés de la pluralité de flancs (51) ; et/ou
- le bac de rangement (6) comprend au moins un organe de renfort, disposé sur au moins l'une des parois (61).

6. Dispositif de rangement (3) selon l'une des revendications précédentes, comprenant, en outre au moins un organe d'amortissement (9) :
- relié à l'au moins un organe de support (55) ou au rebord (63) de sorte à être interposé entre le cadre (5) et le bac de rangement (6) ; et/ou
- relié au couvercle (30) ou au rebord (63) de sorte à être interposé entre le bac de rangement (6) et le couvercle (30).

7. Dispositif de rangement (3) selon l'une des revendications précédentes, comprenant en outre un accessoire, tel qu'une doublure, une paroi amovible, une boîte de stockage et/ou un organe de fixation, configuré pour être disposé dans le volume interne (60) du bac de rangement (6).

8. Agencement (2) pour véhicule (1) automobile comprenant un dispositif de rangement (3) selon l'une des revendications précédentes, une structure de caisse (4) et une pluralité de moyens de fixation (31), le dispositif de rangement (3) étant relié, par l'intermédiaire de la pluralité de pattes de fixation (56) et des moyens de fixation (31), à la structure de caisse (4).

9. Véhicule (1) automobile comprenant un compartiment avant (11) et un compartiment arrière (12), ainsi qu'un dispositif de rangement (3) selon l'une des revendications 1 à 7 ou un agencement (2) selon la revendication précédente disposé dans le compartiment avant (11) ou dans le compartiment arrière (12) du véhicule (1).

10. Procédé d'utilisation d'un dispositif de rangement (3) selon l'une des revendications 1 à 7, d'un agencement (2) selon la revendication 8 ou d'un véhicule (1) selon la revendication précédente, comprenant :
- la préhension puis l'extraction du bac de rangement (6) de sorte à le séparer du cadre (5) de support ; et/ou
- la préhension du bac de rangement (6) puis le positionnement du bac de rangement (6) dans l'espace (52) délimité par le cadre (5) de sorte à disposer le rebord (63) du bac de rangement (6) au contact de l'au moins un organe de support (55) du cadre (5).
